# EUROPÄISCHE PATENTSCHRIFT

(11) **EP 2 779 138 B1**
(45) Veröffentlichungstag und Bekanntmachung des Hinweises auf die Patenterteilung: **18.11.2015**
(21) Anmeldenummer: 13158878.2
(22) Anmeldetag: 13.03.2013
(51) Int. Cl.: G08G 1/017, G06K 9/00, G08G 1/04, G08G 1/048, G06K 9/32

(54) **Verfahren zum Lesen von Fahrzeug-Kennzeichen**
Method for reading vehicle license plates
Procédé de lecture de numéros d'immatriculation de véhicules

(43) Veröffentlichungstag der Anmeldung: 17.09.2014
(73) Patentinhaber: Kapsch TrafficCom AG, 1120 Wien (AT)
(72) Erfinder: Leihs, Dietrich, 1120 Wien (AT); Abl, Alexander, 9073 Viktring (AT); Nagy, Oliver, 1190 Wien (AT)
(74) Vertreter: Weiser, Andreas

(56) Entgegenhaltungen:
- EP-A2- 1 085 455
- US-A1- 2012 155 712

## Beschreibung

Die Erfindung betrifft ein Verfahren zum Lesen von Fahrzeug-Kennzeichen mittels Optical Character Recognition (OCR) in einem Straßennetz.

Derartige Verfahren werden bei z.B. videobasierten Straßenmaut- oder Parkgebührensystemen verwendet, um Fahrzeuge anhand ihres Fahrzeug-Kennzeichens (licence plate number, LPN) zu identifizieren und dadurch Ortsnutzungen der Fahrzeuge zu vergebühren, zu verfolgen oder zu ahnden. In Bildaufnahmen der Kennzeichentafeln passierender Fahrzeuge werden die Fahrzeug-Kennzeichen lokalisiert und durch einen OCR-Lesevorgang in eine Zeichenkette (character string) einzelner Zeichen umgewandelt.

Die Fehlerrate von OCR-Verfahren ist jedoch im praktischen Betrieb aufgrund von wechselnden Licht- und Sichtverhältnissen, z.B. durch Schneefall, Regen, Abschattungen oder Blendungen, sowie durch Verschmutzungen oder ungünstige Montagen der Nummerntafeln außerordentlich hoch, meist 10 - 15%. Dieses Problem wird noch dadurch verstärkt, dass die Aufstellorte der OCR-Le-sestationen häufig durch gesetzliche oder technische Rahmenbedingungen vorgegeben sind, z.B. an Grenzstationen oder wo Strom- und Datenverbindungen vorhanden sind, und somit nicht in Hinblick auf günstige Sichtverhältnisse gewählt werden können, was saubere Bildaufnahmen der Fahrzeug-Kennzeichen und damit den OCR-Vorgang weiter erschwert. Ein solches Verfahren ist aus der US 2012/0155712 bekannt.

Die Erfindung setzt sich zum Ziel, diese Nachteile zu überwinden und ein verbessertes Verfahren zum OCR-Lesen von Fahrzeug-Kennzeichen zu schaffen.

Dieses Ziel wird mit einem Verfahren der einleitend genannten Art erreicht, umfassend:
Bildaufnehmen eines Fahrzeug-Kennzeichens an einem ersten Ort im Straßennetz, OCR-Lesen einer Kennzeichen-Zeichenkette in der Bildaufnahme und Speichern eines OCR-Datensatzes inkludierend diese Kennzeichen-Bildaufnahme, diese Kennzeichen-Zeichen-kette und zumindest ein Konfidenzmaß dieses OCR-Lesevorgangs in einer Datenbank;
Bildaufnehmen eines Fahrzeug-Kennzeichens an einem zweiten Ort im Straßennetz, OCR-Lesen einer Kennzeichen-Zeichenkette in der Bildaufnahme und Erzeugen eines aktuellen OCR-Datensatzes inkludierend diese Kennzeichen-Bildaufnahme, diese Kennzeichen-Zeichenkette und zumindest ein Konfidenzmaß dieses OCR-Lesevorgangs;
und, wenn zumindest ein Konfidenzmaß des aktuellen OCR-Datensatzes einen ersten Mindestkonfidenzwert unterschreitet, Auswählen zumindest eines gespeicherten OCR-Datensatzes aus der Datenbank, dessen Kennzeichen-Bildaufnahme eine einen Mindestähnlichkeitswert überschreitende Ähnlichkeit und/oder die jeweils größte Ähnlichkeit mit der Kennzeichen-Bildaufnahme des aktuellen OCR-Datensatzes hat, und Verwenden des zumindest einen ausgewählten OCR-Datensatzes zur Verbesserung der Kennzeichen-Zeichenkette des aktuellen OCR-Datensatzes.

Auf diese Weise werden ein oder mehrere frühere OCR-Leseergebnisse eines Fahrzeug-Kennzeichens zur Unterstützung bzw. Verbesserung des aktuellen OCR-Leseergebnisses herangezogen. Die Fehlerrate des OCR-Lesevorgangs kann so durch eine kombinierte Betrachtung bzw. Auswertung mehrerer OCR-Leseergebnisse entscheidend gesenkt werden. Die Erfindung beruht dabei auf der Erkenntnis, dass in einem zeitlich und/oder örtlich begrenzten Bereich des Straßennetzes mit mehreren geographisch verteilten OCR-Lesestationen eine signifikante Wahrscheinlichkeit für ein zwei- oder mehrmaliges OCR-Lesen ein und desselben Fahrzeug-Kennzeichens besteht. Dadurch können in einem OCR-Lesevorgang die Fehlermöglichkeiten reduziert werden, indem das aktuelle Kennzeichen-Leseergebnis durch eine Auswahl unter bzw. eine Überlagerung mit früheren Kennzeichen-Leseergebnissen verbessert wird. So können auch zusätzliche OCR-Lesevorgänge an besonders "günstigen" Orten vorgenommen werden, z.B. wo Fahrzeuge langsam und/oder mit großem Abstand fahren, wo alle Fahrzeuge eines Gebiets passieren müssen, z.B. an Grenzstationen, wo gute Sichtverhältnisse herrschen, z.B. auf gut ausgeleuchteten Stra-ßenstücken, oder wo keine Wettereinflüsse vorliegen, z.B. in Tunnels od.dgl. Mit all diesen Maßnahmen können die Fehlermöglichkeiten und damit Fehlerraten von OCR-Lesevorgängen an "ungünstigen" Orten, welche z.B. aufgrund gesetzlicher und/oder technischer Vorgaben erforderlich sind, unterstützt und verbessert werden.

Demgemäß zeichnet sich eine besonders bevorzugte Ausführungsform des Verfahrens dadurch aus, dass ausgehend von mehreren verschiedenen ersten Orten mehrere verschiedene OCR-Datensätze in der Datenbank gespeichert werden. Je mehr und bessere erste OCR-Lesevorgänge und damit OCR-Datensätze an ersten Orten erzeugt werden, umso besser kann die Unterstützung der zweiten OCR-Lesevorgänge an den zweiten Orten durchgeführt werden.

Eine bevorzugte Anwendung des erfindungsgemäßen Verfahrens besteht darin, dass die Kennzeichen-Zeichenkette des aktuellen OCR-Datensatzes dazu verwendet wird, eine Ortsnutzung des Fahrzeugs im Straßennetz zu vermauten, beispielsweise die Berechnung und Einhebung einer Straßenmaut für eine Mautstraße oder ein Autobahnteilstück, einer Gebietsmaut für das Betreten bzw. für den Aufenthalt in einem Gebiet, z.B. eine City-Maut, einer Park- oder Aufenthaltsgebühr für die Zeitnutzung eines Orts, z.B. eines Parkplatzes, oder einer Strafgebühr für eine unberechtigte Ortsnutzung, z.B. das Befahren eines Sperrgebiets od.dgl. Allgemein gesprochen kann die Ortsnutzung sowohl zeitals auch ortsbezogen oder auch beides vermautet (vergebührt) werden. Anwendungen des erfindungsgemäßen Verfahrens sowohl in "offenen" als auch in "geschlossenen" Straßenmautsystemen sind möglich: Bei offenen Straßenmautsystemen wird eine Mautstation innerhalb eines zu vermautenden Straßenstücks angeordnet, und bei geschlossenen Mautsystemen werden Mautstationen an den Ein-und Ausfahrten eines zu vermautenden Straßenstücks angeordnet.

In einer ersten besonders vorteilhaften Ausführungsform des Verfahrens kann die genannte Verbesserung durch Superponieren der Kennzeichen-Bildaufnahme(n) des zumindest einen ausgewählten OCR-Datensatzes und der Kennzeichen-Bildaufnahme des aktuellen OCR-Datensatzes und durch erneutes OCR-Lesen der Kennzeichen-Zeichenkette des aktuellen OCR-Datensatzes in der Superposition erfolgen. So können mehrere "unscharfe" Bildaufnahmen durch Überlagern (Superponieren) zu einem "schärferen" Bild (die Superposition) überlagert werden, in welchem das OCR-Lesen mit geringerer Fehlerrate durchgeführt werden kann.

Gemäß einer alternativen Ausführungsform des Verfahrens kann die genannte Verbesserung durch Übernehmen der Kennzeichen-Zeichenkette des ausgewählten OCR-Datensatzes, wenn zumindest ein Konfidenzmaß desselben einen zweiten Mindestkonfidenzwert überschreitet und/oder größer ist als das entsprechende Konfidenzmaß des aktuellen OCR-Datensatzes, in den aktuellen OCR-Datensatz erfolgen. Dadurch kann ein "besseres" OCR-Leseergebnis aus einem der gespeicherten früheren OCR-Datensätze ein "schlechteres" Leseergebnis im aktuellen OCR-Datensatz ersetzen, wenn es ähnlich ist und seine Konfidenzmaße ausreichend und/oder besser sind.

Gemäß einer weiteren bevorzugten Variante des Verfahren wird ein OCR-Datensatz nur dann in der Datenbank gespeichert, wenn sein zumindest eines Konfidenzmaß einen dritten Mindestkonfidenzwert überschreitet. Dadurch enthält die Datenbank nur OCR-Datensätze mit "guten" Kennzeichen-Leseergebnissen, was die anschließenden Auswahl- bzw. Ähnlichkeitsvergleichschritte erleichtert.

Das genannte Konfidenzmaß des OCR-Lesevorgangs gibt die Qualität bzw. Trefferrate der OCR-Umwandlung der Bildaufnahme in eine Zeichenkette wieder und ist ein Nebenprodukt der in der Technik bekannten OCR-Leseverfahren: Es gibt die Zuverlässigkeit (Konfidenz) des Lesevorgangs an, d.h. mit welcher Wahrscheinlichkeit die "richtigen" Zeichen in der Bildaufnahme identifiziert und erkannt wurden. Beispielsweise kann das Konfidenzmaß ein Ähnlichkeits- bzw. Übereinstimmungsmaß der in der Bildaufnahme abgebildeten graphischen Zeichen mit vorbekannten Buchstaben- und Ziffernformen angeben. Der OCR-Lesevorgang kann dabei ein gesamtes, "globales" Konfidenzmaß liefern, oder bevorzugt für jedes einzelne Zeichen der erzeugten Zeichenkette ein eigenes (Zeichen-) Konfidenzmaß. Jedes beliebige, mehrere oder alle dieser Konfidenzmaße können in die genannten Vergleiche eingehen. Darüber hinaus kann auch aus den einzelnen Zeichen-Konfidenzmaßen aller Zeichen der Zeichenkette das "globale" Konfidenzmaß als ein weiteres Konfidenzmaß gemittelt werden, welches für die vorgenannten Vergleiche verwendet werden kann.

Eine weitere vorteilhafte Ausführungsform des Verfahrens zeichnet sich dadurch aus, dass der bzw. jeder gespeicherte OCR-Datensatz und der aktuelle OCR-Datensatz jeweils auch den Ort ihrer Kennzeichen-Bildaufnahme enthalten, und dass beim genannten Auswählen nur jene gespeicherten OCR-Datensätze berücksichtigt werden, deren Orte in einem vorgegeben Bereich um den Ort des aktuellen OCR-Datensatzes liegen. Alternativ oder zusätzlich können der bzw. jeder gespeicherte OCR-Datensatz und der aktuelle OCR-Datensatz jeweils auch die Zeit ihrer Kennzeichen-Bildaufnahme enthalten und beim genannten Auswählen werden nur jene gespeicherten OCR-Datensätze berücksichtigt, deren Zeiten in einem vorgegebenen Zeitraum um die Zeit des aktuellen OCR-Datensatzes liegen. Anstelle eines solchen "Zeitstempels" kann auch vorgesehen werden, dass die OCR-Datensätze in der Datenbank jeweils nur für einen vorgegebenen Zeitraum gespeichert werden, was eine besonders einfache Art der Nichtberücksichtigung "zu alter" OCR-Datensätze ermöglicht. Alle diese Maßnahmen haben den Vorteil, dass die Auswahl unter den gespeicherten OCR-Datensätzen rascher und treffsicherer wird und auch die anschließende Verbesserung des aktuellen OCR-Datensatzes vereinfacht wird.

Besonders günstig ist es, wenn die ersten Orte zumindest einige, bevorzugt alle Schnittpunkte des Straßennetzes mit einem geschlossenen geographischen Gebiet umfassen. Das geographische Gebiet kann insbesondere eine Stadt oder ein Land sein. Dadurch enthält die Datenbank gleichsam einen "Pool" aller im geographischen Gebiet bislang - eventuell in einem vorgegebenen Zeitraum - z.B. dem aktuellen Tag - gelesenen Fahrzeug-Kennzeichen, welche für die Verbesserung des jeweils aktuellen OCR-Datensatzes herangezogen werden.

Das Verfahren der Erfindung eignet sich sowohl für stationäre als auch mobile OCR-Lesestationen. Beispielsweise kann das Bildaufnehmen an den ersten Orten von einem vor oder hinter dem zu kontrollierenden Fahrzeug fahrenden Kontrollfahrzeug aus durchgeführt werden, welches insbesondere bei gleicher Fahrgeschwindigkeit und kurzem Fahrzeugabstand eine ausgezeichnete Sicht auf die Kennzeichentafel des Vorder- bzw. Hintermanns hat und dadurch ein qualitativ hochwertiges Kennzeichenleseergebnis mit einem hohen Konfidenzmaß erzeugen kann, um es z.B. OCR-Lesestationen an ungünstigen zweiten Orten zur Verbesserung ihrer OCR-Datensätze zur Verfügung zu stellen. Umgekehrt kann auch das Bildaufnehmen an einem zweiten Ort von einem fahrenden Kontrollfahrzeug aus durchgeführt werden, welches beispielsweise im Gegenverkehr nur vorübergehende und schlechte Sicht auf die Kennzeichentafel hat und durch "gute" OCR-Datensätze von OCR-Lesestationen an "günstigen" stationären Orten gestützt werden kann.

Das Verfahren der Erfindung kann sowohl mit Hilfe einer zentralen Datenbank durchgeführt werden, als auch mit Hilfe von direkten gegenseitigen Zugriffen der ersten und zweiten OCR-Lesestationen. Gemäß einer bevorzugten Ausführungsform des Verfahrens wird die Datenbank in einer Zentrale des Straßennetzes geführt und die zu speichernden OCR-Datensätze werden von den ersten Orten an die Zentrale gesandt, und der aktuelle OCR-Datensatz vom zweiten Ort an die Zentrale für das genannte Auswählen; alternativ kann die Datenbank lokal an einem der ersten Orte geführt werden und der aktuelle OCR-Datensatz wird vom zweiten Ort an den nächstliegenden ersten Ort für das genannte Auswählen gesandt.

Die Erfindung wird nachstehend anhand von in den beigeschlossenen Zeichnungen dargestellten Ausführungsbeispielen näher erläutert. In den Zeichnungen zeigt:
Fig. 1 ein Straßennetz mit OCR-Lesestationen und einer zentralen Datenbank zur Durchführung des Verfahrens der Erfindung;
Fig. 2 einige der OCR-Lesestationen von Fig. 1 in Verbindung mit der zentralen Datenbank blockschaltbildlich im Detail; und
Fig. 3 beispielhafte Fahrzeug-Kennzeichen und OCR-Datensätze und deren Auswertungen in den verschiedenen Phasen des Verfahrens der Erfindung.

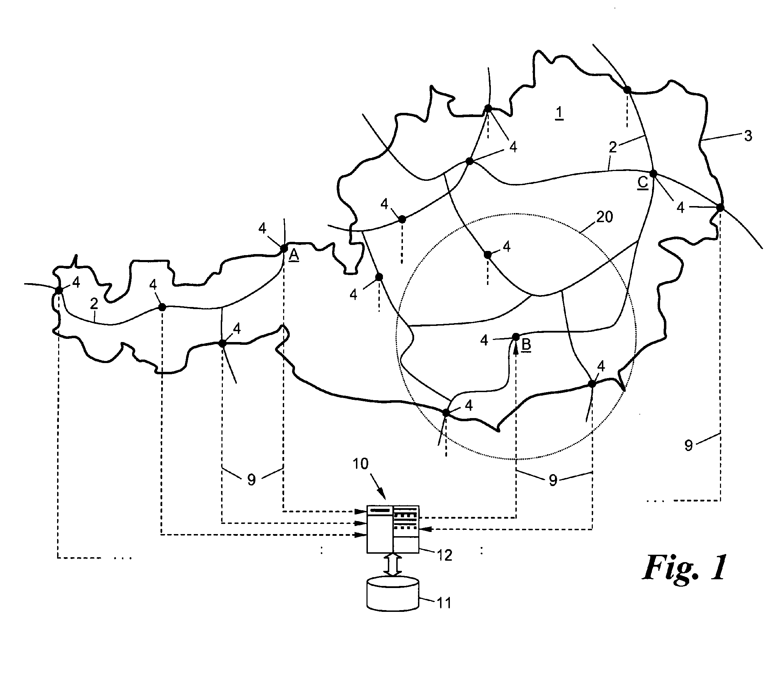

In Fig. 1 ist ein Straßennetz 1 mit einer Vielzahl untereinander verbundener Straßenabschnitte 2 gezeigt, und zwar ausschnittsweise jener Teil des Straßennetzes 1, der in ein geographisches Gebiet 3 fällt. Das geographische Gebiet 3 kann beispielsweise ein Land (wie hier Österreich), aber auch eine Gemeinde, eine Autobahn mit mehreren Teilstrecken, eine Innenstadt usw. sein.

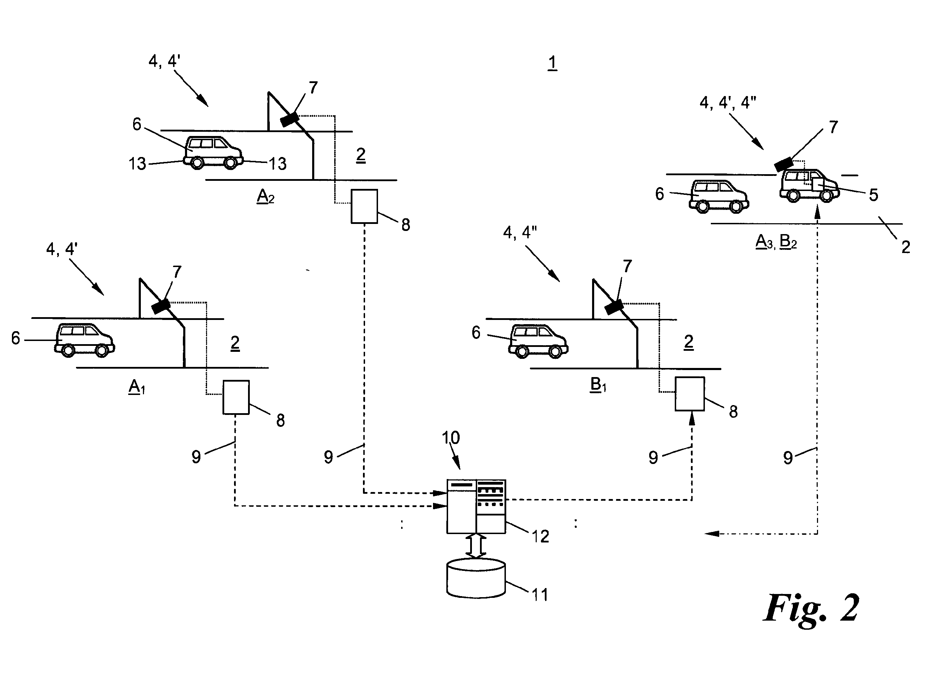

Im Straßennetz 1 sind zahlreiche OCR-Lesestationen 4 verteilt, von denen einige in Fig. 2 im Detail gezeigt und dort entsprechend ihrer jeweiligen Rolle als "erste" oder "zweite" OCR-Lesestation im Rahmen des hier beschriebenen Verfahrens mit 4' und 4" unterschieden sind. Es versteht sich, dass jede der in Fig. 1 gezeigten OCR-Lesestationen 4 jeweils sowohl als erste OCR-Lesestationen 4' als auch als zweite OCR-Lesestationen 4" fungieren kann. Überdies kann jede der OCR-Lesestationen 4 sowohl stationär als auch mobil sein, wie bei der in Fig. 2 äußerst rechts dargestellten, von einem Kontrollfahrzeug 5 mitgeführten OCR-Lesestation 4 veranschaulicht ist.

Die OCR-Lesestationen 4 werden bevorzugt - wenn auch nicht zwingend - so verteilt, dass einige oder alle Schnittpunkte des Straßennetzes 1 mit dem Umriss (der Grenzlinie) des geographischen Gebiets 3 eine OCR-Lesestation 4 haben, siehe z.B. die beispielhafte "Grenz"-OCR-Lesestation 4 am Ort A, um in das und aus dem Gebiet 3 hinein- und herausfahrende Fahrzeuge 6 möglichst lückenlos zu erfassen. Weitere OCR-Lesestationen 4 können in großer Zahl innerhalb des geographischen Gebiets 3 liegen, und zwar sowohl auf bzw. in einem Straßenabschnitt 2, wie am Ort B gezeigt, als auch an Schnittpunkten zweier Straßenabschnitte 2, wie bei C veranschaulicht.

Gemäß Fig. 2 weist jede OCR-Lesestation 4 (bzw. 4', 4") eine Foto- oder Filmkamera 7 und eine daran angeschlossene Recheneinheit 8 auf, die über drahtgebundene oder drahtlose Datenverbindungen 9 mit einer Zentrale 10 des Straßennetzes 1 in Verbindung stehen. Die Zentrale 10 enthält eine Datenbank 11, deren Zweck später noch näher erläutert wird, und eine entsprechende Recheneinheit 12 zur Führung der Datenbank 11. Die Datenverbindungen 9 können ein Intra- oder Extranet, das Internet, terrestrische oder satellitengestützte Mobilfunknetze sein oder mitumfassen, od.dgl.

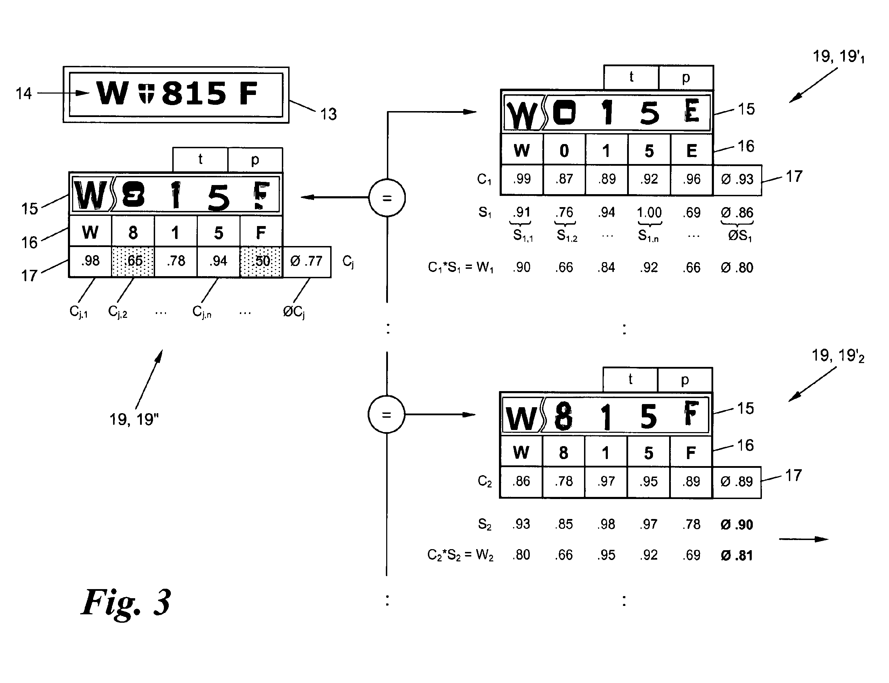

Die OCR-Lesestationen 4 nehmen jeweils ein Bild (eine "Bildaufnahme") 15 des auf einer Nummern- bzw. Kennzeichentafel (licence plate) 13 eines Fahrzeugs 6 angebrachten Fahrzeug-Kennzeichens (licence plate number, LPN) 14 auf. Fig. 3 zeigt eine beispielhafte Kennzeichentafel 13 mit dem Fahrzeug-Kennzeichen 14 "W815F". Der Informationsgehalt des "Fahrzeug-Kennzeichens" 14 der Kennzeichentafel 13 ist somit eine maschinell einfach verarbeitbare Zeichenkette ("character string") 16 aus den einzelnen Zeichen "W", "8", "1", "5", "F", ohne unnotwendige Bildinformationen wie das im vorliegenden Beispiel auf der Kennzeichentafel 13 ersichtliche Stadtwappen.

Aufgabe der OCR-Lesestation 4 ist es, die Kennzeichen-Zeichenkette 16 "W815F" mittels OCR (optical character recognition) aus einer von der Kamera 7 aufgenommenen Bildaufnahme 15 der Kennzeichentafel 13 zu ermitteln. Es versteht sich, dass die Bildaufnahme 15 auch weitere Teile des Fahrzeugs bzw. seiner Umgebung enthalten kann, was hier ohne Belang ist.

Der OCR-Lesevorgang zur Umwandlung der Kennzeichen-Bildaufnahme 15 in die Kennzeichen-Zeichenkette 16 kann dabei sowohl in der lokalen Recheneinheit 8 der OCR-Lesestation 4 als auch erst in der Recheneinheit 12 der Zentrale 10 erfolgen; je nachdem, wird die Kennzeichen-Bildaufnahme 15 nur bis zur Recheneinheit 8 oder weiter bis zur Zentrale 10 gesandt. Auch ist die in Fig. 2 gezeigte Aufteilung der Komponenten 7, 8, 11 und 12 auf die Einheiten 4 und 10 nur logisch und nicht zwingend physisch wie dargestellt. So können einzelne der Komponenten 8, 11 und 12 zwischen den OCR-Lesestationen 4 untereinander und/oder zwischen den OCR-Lesestationen 4 und der Zentrale 10 verteilt oder anders zusammengefasst sein.

Die programmtechnischen Details des OCR-Lesevorgangs zur Umwandlung einer Kennzeichen-Bildaufnahme 15 in eine Kennzeichen-Zeichenkette 16 sind in der Technik bekannt und brauchen hier nicht weiter erörtert zu werden; beispielsweise werden Bildbereiche mit potentiellen Zeichen in der Bildaufnahme 15 gesucht und mit bekannten Zeichenformen z.B. durch zweidimensionale Korrelationsverfahren verglichen, um die einzelnen Zeichen der Kennzeichen-Zeichenkette 16 in der Bildaufnahme 15 zu identifizieren.

Alle derartigen Ähnlichkeitsvergleich-, Mustererkennungs- bzw. Korrelationsverfahren von OCR-Verfahren liefern dabei als Nebenprodukt stets auch ein sog. Konfidenzmaß, d.h. ein Qualitätsmaß der Zeichenerkennung, welches die Zuverlässigkeit (z.B. den Korrelations- bzw. Übereinstimmungsgrad mit vorgegebenen Zeichenformen) der OCR-Zeichenerkennung angibt. Fig. 3 zeigt einen Vektor 17 aus einzelnen Konfidenzmaßen C_{j,1}, C_{j,2}, ..., allgemein C_{j,n}, die im OCR-Lesevorgang Nr. "j" für das Zeichen an der Position "n" der Zeichenkette 16 erreicht wurden: Das Konfidenzmaß C_{j,1} der OCR-Erkennung des Zeichens "W" an der ersten Position (n = 1) des Fahrzeug-Kennzeichens 14 betrug bei der j-ten OCR-Lesung 98% (hier auch geschrieben als .98), das Konfidenzmaß C_{j,2} des zweiten Zeichens "8" betrug 65%, usw. usf. Aus den Konfidenzmaßen C_{j,n} aller Zeichen der Zeichenkette 16 kann optional ein weiteres, "globales" Konfidenzmaß ØCⱼ gemittelt werden, welches im vorliegenden Beispiel 77% für den OCR-Lesevorgang j betrug.

Es ist nicht notwendig, dass ein OCR-Lesevorgang für jedes einzelne Zeichen ein Konfidenzmaß C_{j,n} ausgibt, ein OCR-Verfahren könnte z.B. auch gleich direkt nur das globale Konfidenzmaß ØCⱼ für den gesamten Umwandlungsvorgang einer Bildaufnahme 15 in eine Zeichenkette 16 liefern.

Die Kennzeichen-Bildaufnahme 15, die daraus OCR-gelesene Kennzeichen-Zeichenkette 16 und zumindest eines der vorgenannten Konfidenzmaße C_{j,n}, ØCⱼ, hier der gesamte Konfidenzmaß-Vektor 17 (mit oder ohne Mittelwert ØCⱼ), bilden einen von der OCR-Lesestation 4 erzeugten OCR-Datensatz 19. Wenn der OCR-Lesevorgang nicht in der lokalen Recheneinheit 8 sondern in der zentralen Recheneinheit 12 durchgeführt wird, kann der OCR-Datensatz 19 auch in der Zentrale 10 zusammengestellt werden.

Wie in Fig. 3 ersichtlich und eingangs erörtert, kann die Bildaufnahme 15 beispielsweise durch schlechte Licht- und Sichtbedingungen, Wettereinflüsse, Verschmutzungen der Kennzeichentafel 13 od.dgl. von mangelhafter Qualität sein, sodass die Richtigkeit der Zeichenkette 16 unsicher ist, was sich in entsprechend geringen Konfidenzmaßen C_{j,n}, ØCⱼ äußert. Beispielsweise sind die Konfidenzmaße C_{j,2} und C_{j,5} des zweiten und fünften Zeichens "8" bzw. "F" der Zeichenkette 16 im OCR-Datensatz 19 äußerst gering, hier 65 bzw. 50%, und auch das globale Konfidenzmaß ØCⱼ beträgt nur 77%. Die Fehlerrate des Kennzeichen-Leseergebnisses, d.h. der Kennzeichen-Zeichenkette 16, ist dementsprechend hoch, und um sie zu verringern wird das folgende Verfahren durchgeführt.

Das Verfahren beruht auf der Verwendung früherer Kennzeichen-Leseergebnisse desselben Fahrzeug-Kennzeichens 14, welche mit anderen OCR-Lesestationen 4 durchgeführt und als OCR-Datensätze 19 in der Datenbank 11 gespeichert wurden. Zu diesem Zweck übersenden alle OCR-Lesestationen 4 die von ihnen erzeugten OCR-Datensätze 19 an die Zentrale 10, und diese speichert die OCR-Datensätze 19 in der Datenbank 11. Dies wird anhand des beispielhaften Szenarios von Fig. 2 und der Daten von Fig. 3 näher erläutert.

In Fig. 2 sind links zwei OCR-Lesestationen 4' gezeigt, welche an zwei verschiedenen ersten Orten A₁ und A₂ jeweils Bildaufnahmen 15 von Fahrzeug-Kennzeichen 14 bzw. Kennzeichentafeln 13 passierender Fahrzeuge 6 erstellen und daraus "erste" OCR-Datensätze 19'₁, 19'₂ in der genannten Art und Weise erzeugen und in die Datenbank 11 einspeisen. Die ersten Orte A₁, A₂ können insbesondere an den Grenzen des Gebiets 3 liegen, dies ist aber nicht zwingend; beispielsweise kann ein erster Ort A₃ auch der momentane Ort eines mobilen Kontrollfahrzeugs 5 sein, welches eine OCR-Lesestation 4 mit sich führt, die dann als eine der ersten OCR-Lesestationen 4' fungiert und einen OCR-Datensatz 19' in die Datenbank 11 einspeist, z.B. über eine Drahtlosverbindung 9.

Zu einem späteren Zeitpunkt und an einem anderen ("zweiten") Ort B₁ liest eine weitere OCR-Lesestation 4, hier in der Rolle einer zweiten OCR-Lesestation 4", wieder ein Fahrzeug-Kennzeichen 14 von einer Kennzeichentafel 13, um eine weitere Bildaufnahme 15 und einen weiteren OCR-Datensatz 19" zu erzeugen. Der weitere Datensatz 19" wird im Folgenden auch als "aktueller" OCR-Datensatz 19" bezeichnet. Wenn zumindest eines der Konfidenzmaße C_{j,n}, ØCⱼ des aktuellen OCR-Datensatzes 19" einen vorgegebenen Mindestkonfidenzwert C_{min,1} von z.B. 80% nicht erreicht bzw. unterschreitet (hier die Konfidenzmaße C_{j,2}, C_{j,5,} ØCⱼ), dann ist die Kennzeichen-Zeichenkette 16 des aktuellen OCR-Datensatzes 19" verbesserungswürdig und es werden die nachfolgend beschriebenen Schritte ausgeführt.

Falls gewünscht, könnte die vorgenannte Überprüfung des Erreichens des Mindestkonfidenzwerts C_{min,1} entfallen und die nachfolgenden Schritte immer ausgeführt werden, was jedoch vermehrten Rechenaufwand bedeutet.

Es werden nun zu dem aktuellen OCR-Datensatz 19" aus der Datenbank 11 jene gespeicherten OCR-Datensätze 19'₁, 19'₂, ..., allgemein 19'ᵢ, herausgesucht und ausgewählt, welche eine Bildaufnahme 15 enthalten, die der Bildaufnahme 15 des aktuellen OCR-Datensatzes 19" ähnelt. Für diesen Ähnlichkeitsvergleich kann wieder ein Bildmustervergleich bzw. eine zweidimensionale Korrelation der gespeicherten Bildaufnahmen 15 mit der aktuellen Bildaufnahme 15 durchgeführt und ein Ähnlichkeitsmaß (Korrelationsmaß) S₁, S₂, ..., allgemein S₁, ermittelt werden.

In dem in Fig. 3 gezeigten Beispiel wurde für jedes einzelne in den Bildaufnahmen 15 lokalisierbare Zeichen ein eigenes Ähnlichkeitsmaß S_{i,n} zwischen der Bildaufnahme 15 des aktuellen OCR-Datensatzes 19" und den Bildaufnahmen 15 der gespeicherten OCR-Datensätze 19'₁, 19'₂ berechnet, siehe den Ähnlichkeitsvektor S₁ {91%, 76%, 94%, 100%, 69%} für den Vergleich mit dem OCR-Datensatz 19'₁ und den Ähnlichkeitsvektor S₂ {93%, 85%, 98%, 97%, 78%} für den Vergleich mit dem OCR-Datensatz 19'₂. Alternativ oder zusätzlich können auch (globale) Ähnlichkeitsmaße ØSᵢ aus den einzelnen Zeichenähnlichkeiten S_{i,n} gemittelt werden, siehe die gemittelte Ähnlichkeit ØS₁ = 86% des ersten gespeicherten OCR-Datensatzes 19'₁ mit dem aktuellen OCR-Datensatz 19", und die gemittelte Ähnlichkeit ØS₂ = 90% des zweiten gespeicherten OCR-Datensatzes 19'₂ mit dem aktuellen OCR-Datensatz 19".

Bei der Ermittlung der Ähnlichkeitsmaße S_{i,n}, ØSᵢ können optional auch die Konfidenzmaße C_{i,n}, ØCᵢ der einzelnen gespeicherten OCR-Datensätze 19'ᵢ mitberücksichtigt werden. So können beispielsweise die einzelnen Zeichen-Ähnlichkeitsmaße S_{i,n} mit den jeweiligen Zeichen-Konfidenzmaßen C_{i,n} gewichtet werden, z.B. durch Multiplizieren zu einem gewichteten Ähnlichkeitsmaß Wi,n = Ci_{,n} · S_{i,n}, und dieses als Ähnlichkeitsmaß weiterverwendet werden.

Anhand der Ähnlichkeitsmaße S_{i,n}, ØSᵢ (bzw. W_{i,n}, ØWₙ) werden nun jene m Stück (m = 1, 2, ...) gespeicherten OCR-Datensätze 19'ᵢ aus der Datenbank 11 ermittelt, die entweder die m größten Ähnlichkeitsmaße ØSᵢ (bzw. Øwᵢ) haben (hier, bei m = 1: der OCR-Datensatz 19'₂ mit ØS₂ = 90%), oder aber all jene m Stück gespeicherten OCR-Datensätze 19'ᵢ, deren Ähnlichkeitsmaß ØSᵢ (bzw. ØWᵢ) einen Mindestähnlichkeitswert Sₘᵢₙ überschreitet.

Aus den so ermittelten ähnlichsten m OCR-Datensätzen 19'ᵢ werden nun die darin enthaltenen Bildaufnahmen 15 entnommen und verwendet, um die Kennzeichen-Zeichenkette 16 des aktuellen OCR-Datensatzes 19" zu verbessern. In einer ersten Variante des Verfahrens werden dazu die aktuelle Bildaufnahme 15 und die Bildaufnahmen 15 der m Stück ausgewählten OCR-Datensätze 19'ᵢ superponiert (überlagert), z.B. pixelweise, um die aktuelle Bildaufnahme 15 zu schärfen. Es versteht sich, dass dieses Superponieren jede in der Technik bekannte Form von Bildverarbeitungsverfahren umfasst, bei dem aus zwei oder mehr Bildern ein und desselben Gegenstands ein verbessertes einziges Bild des Gegenstands erzeugt werden kann. In der Superposition wird die Zeichenkette 16 dann erneut OCR-gelesen, um einen verbesserten aktuellen OCR-Datensatz 19" zu erzeugen.

In einer alternativen Ausführungsform des Verfahrens wird die Kennzeichen-Zeichenkette 16 des aktuellen OCR-Datensatzes 19" direkt durch die Kennzeichen-Zeichenkette 16 des ähnlichsten gespeicherten OCR-Datensatzes 19'ᵢ ersetzt, wenn deren Konfidenzmaße ausreichend sind, d.h. wenn entweder alle deren Konfidenzmaße C_{i,n} oder zumindest deren globales Konfidenzmaß ØCᵢ einen zweiten Mindestkonfidenzwert C_{min,2} überschreiten und/oder größer sind als das jeweilige Konfidenzmaß C_{j,n}, ØCⱼ des aktuellen OCR-Datensatzes 19". Bei dieser Variante wird also die Kennzeichen-Zeichenkette 16 des "ähnlichsten" "besseren" OCR-Datensatzes 19'ᵢ in den aktuellen OCR-Datensatz 19" übernommen.

Die solcherart verbesserte Kennzeichen-Zeichenkette 16 des aktuellen OCR-Datensatzes 19" kann dann in weiterer Folge dazu verwendet werden, die Ortsnutzung des Fahrzeugs 6 am zweiten Ort B zu kontrollieren, zu vermauten, zu ahnden od.dgl.

Jeder OCR-Datensatz 19 bzw. 19', 19" kann zusätzlich den Ort p (d.h. Aᵢ, Bⱼ) und/oder die Zeit t der Erstellung der Bildaufnahme 15 enthalten, wie in Fig. 3 gezeigt. Damit ist es möglich, beim Ähnlichkeitsvergleich des aktuellen OCR-Datensatzes 19" mit den gespeicherten OCR-Datensätzen 19'ᵢ nur jene gespeicherten OCR-Datensätze 19'ᵢ zu berücksichtigen, die innerhalb eines örtlichen vorgegebenen Bereichs 20 um den aktuellen ("zweiten") Ort Bⱼ liegen, und/oder nur jene gespeicherten OCR-Datensätze 19'ᵢ zu berücksichtigen, deren Zeit t in einem vorgegebenen Zeitraum ΔT rund um die aktuelle Zeit t des aktuellen OCR-Datensatzes 19" liegen. Der Zeitraum ΔT kann beispielsweise ein Tag oder einige Stunden vor dem aktuellen Zeitpunkt t des aktuellen OCR-Datensatzes 19" sein, aber auch rund um den aktuellen Zeitpunkt t, d.h. davor und danach oder nur danach, sodass sogar zeitlich *frühere* OCR-Datensätze 19" mit Hilfe von zeitlich *späteren* OCR-Datensätzen 19'ᵢ verbessert werden können (was selbstverständlich nur "offline", nicht in Echtzeit, möglich ist). Nichtsdestoweniger können damit beliebige OCR-Datensätze 19', 19" aus ein und demselben Bereich 20 und/oder ein und demselben Zeitraum ΔT zur gegenseitigen Verbesserung verwendet werden.

Die OCR-Lesestationen 4', welche OCR-Datensätze 19'ᵢ in die Datenbank 11 einspeisen, werden bevorzugt an besonders "günstigen" ersten Orten Aᵢ positioniert, um OCR-Datensätze 19'ᵢ hoher Qualität, d.h. mit großen Konfidenzmaßen C_{i,n} bzw. Cᵢ, zu erzeugen. Optional kann durch eine zusätzliche Überprüfung sichergestellt werden, dass die von einer ersten OCR-Lesestation 4' in die Datenbank 11 eingespeisten OCR-Datensätze 19'ᵢ jeweils Mindestanforderungen an ihre Konfidenzmaße C_{i,n} bzw. ØCᵢ erfüllen, d.h. ein OCR-Datensatz 19'ᵢ wird nur dann in der Datenbank 11 gespeichert, wenn alle seine Konfidenzmaße C_{i,n} oder zumindest sein globales Konfidenzmaß ØCᵢ einen dritten Mindestkonfidenzwert C_{min,3} überschreiten.

Es versteht sich, dass die Datenbank 11 nicht notwendigerweise zentral für das gesamte Straßennetz 1 sein muss. Beispielsweise kann sie auch lokal in einer OCR-Lesestation 4 - auch nur für einen Teil des Straßennetzes 1 - geführt werden, z.B. direkt am Ort Aᵢ in der Recheneinheit 8 einer ersten OCR-Lesestation 4', und diese kann den Inhalt ihrer Datenbank 11 direkt einer anderen OCR-Lesestation 4", welche einer Verbesserung ihres Kennzeichen-Leseergebnisses bedarf, zur Abfrage zur Verfügung stellen oder an diese versenden.

Die Erfindung ist demgemäß nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Lesen von Fahrzeug-Kennzeichen (14) mittels OCR in einem Straßennetz (1), umfassend:
Bildaufnehmen eines Fahrzeug-Kennzeichens (14) an einem ersten Ort (Aᵢ) im Straßennetz (1), OCR-Lesen einer Kennzeichen-Zeichenkette (16) in der Bildaufnahme (15) und Speichern eines OCR-Datensatzes (19'ᵢ) inkludierend diese Kennzeichen-Bildaufnahme (15), diese Kennzeichen-Zeichenkette (16) und zumindest ein Konfidenzmaß (C_{i,n}, ØCᵢ) dieses OCR-Lesevorgangs in einer Datenbank (11);
Bildaufnehmen eines Fahrzeug-Kennzeichens (14) an einem zweiten Ort (Bⱼ) im Straßennetz (1), OCR-Lesen einer Kennzeichen-Zeichenkette (16) in der Bildaufnahme (15) und Erzeugen eines aktuellen OCR-Datensatzes (19") inkludierend diese Kennzeichen-Bildaufnahme (15), diese Kennzeichen-Zeichenkette (16) und zumindest ein Konfidenzmaß (C_{j,n}, ØCⱼ) dieses OCR-Lesevorgangs;
und, wenn zumindest ein Konfidenzmaß (C_{j,n}, ØCⱼ) des aktuellen OCR-Datensatzes (19") einen ersten Mindestkonfidenzwert (C_{min,1}) unterschreitet, Auswählen zumindest eines gespeicherten OCR-Datensatzes (19'ᵢ) aus der Datenbank (11), dessen Kennzeichen-Bildaufnahme (15) eine einen Mindestähnlichkeitswert (Sₘᵢₙ) überschreitende Ähnlichkeit (ØSᵢ, ØWᵢ) und/oder die jeweils größte Ähnlichkeit (ØSᵢ, ØWᵢ) mit der Kennzeichen-Bildaufnahme (15) des aktuellen OCR-Datensatzes (19") hat, und Verwenden des zumindest einen ausgewählten OCR-Datensatzes (19'ᵢ) zur Verbesserung der Kennzeichen-Zeichenkette (16) des aktuellen OCR-Datensatzes (19").

2. Verfahren nach Anspruch 1, **dadurch gekennzeichnet, dass** ausgehend von mehreren verschiedenen ersten Orten (Aᵢ) mehrere verschiedene OCR-Datensätze (19'ᵢ) in der Datenbank (11) gespeichert werden.

3. Verfahren nach Anspruch 1 oder 2, **dadurch gekennzeichnet, dass** die Kennzeichen-Zeichenkette (16) des aktuellen OCR-Datensatzes (19") dazu verwendet wird, eine Ortsnutzung des Fahrzeugs (6) im Straßennetz (1) zu vermauten.

4. Verfahren nach einem der Ansprüche 1 bis 3, **dadurch gekennzeichnet, dass** die Verbesserung durch Superponieren der Kennzeichen-Bildaufnahme(n) (15) des zumindest einen ausgewählten OCR-Datensatzes (19'ᵢ) und der Kennzeichen-Bildaufnahme (16) des aktuellen OCR-Datensatzes (19") und durch erneutes OCR-Lesen der Kennzeichen-Zeichenkette (16) des aktuellen OCR-Datensatzes (19") in der Superposition erfolgt.

5. Verfahren nach einem der Ansprüche 1 bis 3, **dadurch gekennzeichnet, dass** die Verbesserung durch Übernehmen der Kennzeichen-Zeichenkette (16) des ausgewählten OCR-Datensatzes (19'ᵢ), wenn zumindest ein Konfidenzmaß (C_{i,n}, ØCᵢ) desselben einen zweiten Mindestkonfidenzwert (C_{min,2}) überschreitet und/oder größer ist als das entsprechende Konfidenzmaß (C_{j,n,} ØCⱼ) des aktuellen OCR-Datensatzes (19"), in den aktuellen OCR-Datensatz (19") erfolgt.

6. Verfahren nach einem der Ansprüche 1 bis 5, **dadurch gekennzeichnet, dass** der OCR-Datensatz (19'ᵢ) nur dann in der Datenbank (11) gespeichert wird, wenn sein zumindest eines Konfidenzmaß (C_{i,n}, ØCᵢ) einen dritten Mindestkonfidenzwert (C_{min,3}) überschreitet.

7. Verfahren nach einem der Ansprüche 1 bis 6, **dadurch gekennzeichnet, dass** beim OCR-Lesevorgang für jedes einzelne Zeichen der Zeichenkette (16) ein eigenes Konfidenzmaß (C_{i,n}, C_{j,n}) erzeugt wird, wobei bevorzugt aus den Konfidenzmaßen (C_{i,n}, C_{j,n}) aller Zeichen der Zeichenkette (16) ein weiteres Konfidenzmaß (0Ci, ØCⱼ) gemittelt wird.

8. Verfahren nach einem der Ansprüche 1 bis 7, **dadurch gekennzeichnet, dass** jeder gespeicherte OCR-Datensatz (19'ᵢ) und der aktuelle OCR-Datensatz (19") jeweils auch den Ort (p) ihrer Kennzeichen-Bildaufnahme (15) enthalten, und dass beim genannten Auswählen nur jene gespeicherten OCR-Datensätze (19'ᵢ) berücksichtigt werden, deren Orte (p) in einem vorgegeben Bereich (20) um den Ort (Bⱼ) des aktuellen OCR-Datensatzes (19") liegen.

9. Verfahren nach einem der Ansprüche 1 bis 8, **dadurch gekennzeichnet, dass** jeder gespeicherte OCR-Datensatz (19'ᵢ) und der aktuelle OCR-Datensatz (19") jeweils auch die Zeit (t) ihrer Kennzeichen-Bildaufnahme (15) enthalten, und dass beim genannten Auswählen nur jene gespeicherten OCR-Datensätze (19'ᵢ) berücksichtigt werden, deren Zeiten (t) in einem vorgegebenen Zeitraum (ΔT) um die Zeit (t) des aktuellen OCR-Datensatzes (19") liegen.

10. Verfahren nach einem der Ansprüche 1 bis 9, **dadurch gekennzeichnet, dass** die OCR-Datensätze (19'ᵢ) in der Datenbank (11) jeweils nur für einen vorgegebenen Zeitraum (ΔT) gespeichert werden.

11. Verfahren nach einem der Ansprüche 2 bis 10, **dadurch gekennzeichnet, dass** die ersten Orte (Aᵢ) zumindest einige, bevorzugt alle Schnittpunkte des Straßennetzes (1) mit einem geschlossenen geographischen Gebiet (3) umfassen.

12. Verfahren nach Anspruch 11, **dadurch gekennzeichnet, dass** das geographische Gebiet (3) eine Stadt oder ein Land ist.

13. Verfahren nach einem der Ansprüche 1 bis 12, **dadurch gekennzeichnet, dass** das Bildaufnehmen an zumindest einem ersten oder zweiten Ort (Aᵢ, Bⱼ) von einem fahrenden Kontrollfahrzeug (5) aus erfolgt.

14. Verfahren nach einem der Ansprüche 2 bis 13, **dadurch gekennzeichnet, dass** die Datenbank (11) in einer Zentrale (10) des Straßennetzes (1) geführt wird und die zu speichernden OCR-Datensätze (19'ᵢ) von den ersten Orten (Aᵢ) an die Zentrale (10) gesandt werden und der aktuelle OCR-Datensatz (19") vom zweiten Ort (Bⱼ) an die Zentrale (10) für das genannte Auswählen gesandt wird.

15. Verfahren nach einem der Ansprüche 2 bis 13, **dadurch gekennzeichnet, dass** die Datenbank (11) lokal an einem ersten Ort (Aᵢ) geführt wird und der aktuelle OCR-Datensatz (19") vom zweiten Ort (Bⱼ) an den nächstliegenden ersten Ort (Aᵢ) für das genannte Auswählen gesandt wird.

## Claims

1. A method for reading license plate numbers (14) by means of OCR in a road network (1), comprising:
recording an image of a license plate number (14) at a first location (Aᵢ) in the road network (1), OCR-reading a license plate character string (16) in the image recording (15), and storing an OCR data set (19'ᵢ) including this license plate number image recording (15), this license plate number character string (16) and at least one confidence measure (C_{i,n}, ØCᵢ) of this OCR reading process in a database (11);
recording an image of a license plate number (14) at a second location (Bⱼ) in the road network (1), OCR-reading a license plate number character string (16) in the image recording (15), and generating a current OCR data set (19") including this license plate number image recording (15), this license plate number character string (16) and at least one confidence measure (C_{j,n}, ØCⱼ) of this OCR reading process;
and, if at least one confidence measure (C_{j,n}, ØCⱼ) of the current OCR data set (19") falls below a first minimum confidence value (C_{min,1}), selecting at least one stored OCR data set (19'ᵢ) from the database (11), the license plate number image recording (15) of which OCR data set has a similarity (ØSᵢ, ØWᵢ) that exceeds a minimum similarity value (Sₘᵢₙ) and/or has the greatest respective similarity (ØSᵢ, ØWᵢ) to the license plate number image recording (15) of the current OCR data set (19"), and using the at least one selected OCR data set (19'ᵢ) for improving the license plate number character string (16) of the current OCR data set (19").

2. The method according to claim 1, **characterized in that** based on a plurality of different first locations (Aᵢ), a plurality of different OCR data sets (19'ᵢ) are stored in the database (11).

3. The method according to claim 1 or claim 2, **characterized in that** the license plate number character string (16) of the current OCR data set (19") is used for tolling a location usage of the vehicle (6) in the road network (1).

4. The method according to any one of the claims 1 to 3, **characterized in that** the improvement takes place by superposing the license plate number image recording(s) (15) of the at least one selected OCR data set (19'ᵢ) and the license plate number image recording (16) of the current OCR data set (19"), and by OCR-reading again the license plate number character string (16) of the current OCR data set (19") in the superposition.

5. The method according to any one of the claims 1 to 3, **characterized in that** the improvement takes place by taking over the license plate number character string (16) of the selected OCR data set (19'ᵢ) into the current OCR data set (19") if at least one confidence measure (C_{i,n}, ØCᵢ) of the selected OCR data set exceeds a second minimum confidence value (C_{min,2}) and/or is greater than the corresponding confidence measure (C_{j,n}, ØCⱼ) of the current OCR data set (19").

6. The method according to any one of the claims 1 to 5, **characterized in that** the OCR data set (19'ᵢ) is stored in the database (11) only if its at least one confidence measure (C_{i,n}, ØCᵢ) exceeds a third minimum confidence value (C_{min,3}).

7. The method according to any one of the claims 1 to 6, **characterized in that** during the OCR reading process, a separate confidence measure (C_{i,n}, C_{j,n}) is generated for each individual character of the character string (16), wherein preferably another confidence measure (ØCᵢ, ØCⱼ) is averaged from the confidence measures (C_{i,n}, C_{j,n}) of all characters of the character string (16).

8. The method according to any one of the claims 1 to 7, **characterized in that** each stored OCR data set (19'ᵢ) and the current OCR data set (19") also contain in each case the location (p) of their license plate number image recording (15), and that during said selecting only those stored OCR data sets (19'ᵢ) are considered, the locations (p) of which lie in a predetermined region (20) around the location (Bⱼ) of the current OCR data set (19").

9. The method according to any one of the claims 1 to 8, **characterized in that** each stored OCR data set (19'ᵢ) and the current OCR data set (19") also contain in each case the time (t) of their license plate number image recording (15), and that during said selecting only those stored OCR data sets (19'ᵢ) are considered, the times (t) of which lie within a predetermined period (ΔT) around the time (t) of the current OCR data set (19").

10. The method according to any one of the claims 1 to 9, **characterized in that** the OCR data sets (19'ᵢ) are stored in the database (11) in each case only for a predetermined period (ΔT).

11. The method according to any one of the claims 2 to 10, **characterized in that** the first locations (Aᵢ) comprise at least some, preferably all, intersections of the road network (1) with a closed geographical region (3).

12. The method according to claim 11, **characterized in that** the geographical region (3) is a city or a country.

13. The method according to any one of the claims 1 to 12, **characterized in that** recording an image at at least one first or second location (Aᵢ, Bⱼ) is carried out from a moving control vehicle (5).

14. The method according to any one of the claims 2 to 13, **characterized in that** the database (11) is kept in a control center (10) of the road network (1), and the OCR data sets (19'ᵢ) to be stored are transmitted from the first locations (Aᵢ) to the control center (10), and the current OCR data set (19") is transmitted from the second location (Bⱼ) to the control center (10) for said selecting.

15. The method according to any one of the claims 2 to 13, **characterized in that** the database (11) is kept locally at one of the first locations (Aᵢ), and the current OCR data set (19") is transmitted from the second location (Bⱼ) to the nearest first location (Aᵢ) for said selecting.

## Revendications

1. Procédé de lecture d'immatriculations de véhicules (14) au moyen d'OCR dans un réseau routier (1), comprenant :
la prise d'une photographie d'une immatriculation de véhicule (14) à un premier lieu (Aᵢ) dans le réseau routier (1), la lecture par OCR d'une suite de caractères d'immatriculation (16) dans l'image photographique (15) et l'enregistrement d'une suite de données d'OCR (19'ᵢ) incluant cette image photographique d'immatriculation (15), cette suite de caractères d'immatriculation (16) et au moins une mesure de confiance (C_{i,n}, ØCᵢ) de ce processus de lecture par OCR dans une banque de données (11) ;
la prise d'une photographie d'une immatriculation de véhicule (14) à un deuxième lieu (Bⱼ) dans le réseau routier (1), la lecture par OCR d'une suite de caractères d'immatriculation (16) dans l'image photographique (15) et la création d'une suite de données d'OCR (19") actuelle incluant cette image photographique d'immatriculation (15), cette suite de caractères d'immatriculation (16) et au moins une mesure de confiance (C_{j,n}, ØCⱼ) de ce processus de lecture par OCR ;
et, lorsqu'au moins une mesure de confiance (C_{j,n}, ØCⱼ) de la suite de données d'OCR (19") actuelle est dessous d'une première mesure de confiance minimale (C_{min,i}), le choix d'au moins une suite de données d'OCR (19'ᵢ) mémorisée à partir de la banque de données (11), dont l'image photographique d'immatriculation (15) possède une ressemblance (ØSᵢ, ØWᵢ) dépassant une mesure de ressemblance minimale (Sₘᵢₙ), et/ou possède la ressemblance (ØSᵢ, ØWᵢ) respectivement la plus grande avec l'image photographique d'immatriculation (15) de la suite de données d'OCR (19") actuelle, et l'utilisation de l'au moins une suite de données d'OCR (19'ᵢ) choisie pour l'amélioration de la suite de caractères d'immatriculation (16) de la suite de données d'OCR (19") actuelle.

2. Procédé selon la revendication 1, **caractérisée en ce que** plusieurs suites de données d'OCR (19'ᵢ) différentes sont mémorisées dans la banque de données (11) en partant de plusieurs premiers lieux (Aᵢ) différents.

3. Procédé selon la revendication 1 ou 2, **caractérisé en ce que** la suite de caractères d'immatriculation (16) de la suite de données d'OCR (19") actuelle est employée pour évaluer un péage pour une utilisation d'un lieu dans le réseau routier (1) par le véhicule (6).

4. Procédé selon l'une des revendications 1 à 3, **caractérisé en ce que** l'amélioration a lieu par la superposition de/des l'image(s) photographique(s) d'immatriculation(s) (15) de l'au moins une suite de données d'OCR (19'ᵢ) choisie et de l'image photographique (16) de la suite de données d'OCR (19") actuelle, et par une nouvelle lecture par OCR de la suite de caractères d'immatriculation (16) de la suite de données d'OCR (19") actuelle dans la superposition.

5. Procédé selon l'une des revendications 1 à 3, **caractérisé en ce que** l'amélioration a lieu par la prise en compte de la suite de caractères d'immatriculation (16) de la suite de données d'OCR (19'ᵢ) choisie, lorsqu'au moins une mesure de confiance (C_{i,n}, ØCᵢ) de celle-ci dépasse une deuxième mesure de confiance minimale (C_{min,2}) et/ou est supérieure à la mesure de confiance (C_{j,n}, ØCⱼ) correspondante de la suite de données d'OCR (19") actuelle, dans la suite de données d'OCR (19") actuelle.

6. Procédé selon l'une des revendications 1 à 5, **caractérisé en ce que** la suite de données d'OCR (19'ᵢ) n'est mémorisée dans la banque de données (11) uniquement si sa au moins une mesure de confiance (C_{i,n}, ØCᵢ) dépasse une troisième mesure de confiance minimale (C_{min,3}).

7. Procédé selon l'une des revendications 1 à 6, **caractérisé en ce que**, lors du processus de lecture par OCR, une mesure de confiance propre (C_{i,n}, C_{j,n}) est générée pour chaque caractère individuel de la suite de caractères (16), dans lequel, de préférence, une autre mesure de confiance (ØCᵢ, ØCⱼ) est obtenue par la moyenne des mesures de confiance (C_{i,n}, C_{j,n}) de tous les caractères de la suite de caractères (16).

8. Procédé selon l'une des revendications 1 à 7, **caractérisé en ce que** chaque suite de données d'OCR (19'ᵢ) mémorisée et la suite de données d'OCR (19") actuelle contiennent également le lieu (p) de leur prise d'image photographique d'immatriculation (15), et que, lors dudit choix, uniquement les suites de données d'OCR (19'ᵢ) mémorisées dont les lieux (p) se situent dans un domaine (20) prédéterminé autour du lieu (Bⱼ) de la suite de données d'OCR (19") actuelle sont considérées.

9. Procédé selon l'une des revendications 1 à 8, **caractérisé en ce que** chaque suite de données d'OCR (19'ᵢ) mémorisée et la suite de données d'OCR (19") actuelle contiennent également le temps (t) de leur image photographique d'immatriculation (15), et qu'uniquement les suites de données d'OCR (19'ᵢ) mémorisées, dont les temps (t) se situent dans un intervalle de temps (ΔT) prédéterminé entourant le temps (t) de la suite de données d'OCR (19") actuelle, sont prises en compte lors dudit choix.

10. Procédé selon l'une des revendications 1 à 9, **caractérisé en ce que** les suites de données d'OCR (19'ᵢ) dans la banque de données (11) sont mémorisées uniquement pour un intervalle de temps (ΔT) prédéterminé.

11. Procédé selon l'une des revendications 2 à 10, **caractérisé en ce que** les premiers lieux (Aᵢ) comprennent au moins quelques, de préférence tous, les points d'intersection du réseau routier (1) dans une région (3) géographique fermée.

12. Procédé selon la revendication 11, **caractérisé en ce que** la région (3) géographique fermée est une ville ou un pays.

13. Procédé selon l'une des revendications 1 à 12, **caractérisé en ce que** la prise de photographie à au moins un premier ou deuxième lieu (Aᵢ, Bⱼ) est effectuée à partir d'un véhicule de contrôle (5) circulant.

14. Procédé selon l'une des revendications 2 à 13, **caractérisé en ce que** la banque de données (11) est menée dans un centre (10) du réseau routier (1) et les suites de données d'OCR (19'ᵢ) à mémoriser sont envoyées à partir des premiers lieux (Aᵢ) vers le centre (10) et la suite de données d'OCR (19") actuelle est envoyée à partir du deuxième lieu (Bⱼ) vers le centre (10) pour ledit choix.

15. Procédé selon l'une des revendications 2 à 13, **caractérisé en ce que** la banque de données (11) est menée localement en un premier lieu (Aᵢ) et la suite de données d'OCR (19") actuelle est envoyée à partir du deuxième lieu (Bⱼ) vers le premier lieu (Aᵢ) le plus proche pour ledit choix.
